# EUROPÄISCHE PATENTSCHRIFT

(11) **EP 3 459 830 B1**
(45) Veröffentlichungstag und Bekanntmachung des Hinweises auf die Patenterteilung: **08.07.2020**
(21) Anmeldenummer: 18183301.3
(22) Anmeldetag: 13.07.2018
(51) Int. Cl.: B62D 27/04, B62D 33/06, F16F 15/08, F16F 1/54, F16L 55/132

(54) **KABINE FÜR EIN LANDWIRTSCHAFTLICHES ARBEITSFAHRZEUG**
CABIN FOR AN AGRICULTURAL WORKING DEVICE
CABINE POUR UN ENGIN AGRICOLE

(30) Priorität: 25.09.2017 DE 102017122165
(43) Veröffentlichungstag der Anmeldung: 27.03.2019
(73) Patentinhaber: CLAAS Selbstfahrende Erntemaschinen GmbH, 33428 Harsewinkel (DE)
(72) Erfinder: Kövener, Guido, 48231 Warendorf (DE)
(74) Vertreter: CLAAS Gruppe

(56) Entgegenhaltungen:
- US-A- 3 749 131
- US-A- 4 968 197
- US-A1- 2014 292 035
- US-B1- 6 883 546

## Beschreibung

Die vorliegende Erfindung betrifft Kabine für ein landwirtschaftliches Arbeitsfahrzeug, insbesondere eine selbstfahrende Erntemaschine. Die Kabine umfasst ein Kabinendach sowie eine das Kabinendach aufnehmende Rahmenstruktur, welche in vertikaler Richtung verlaufende Rahmenelemente sowie quer verlaufende Rahmenelemente aufweist, die als Hohlprofile ausgebildet sind.

Aus der EP 2 080 649 B1 ist eine Kabine für ein als Traktor ausgebildetes landwirtschaftliches Arbeitsfahrzeug der eingangs genannten Art bekannt. Die Kabine umfasst ein Kabinendach, welches von mehreren in vertikaler Richtung verlaufenden Rahmenelementen aufgenommen wird. Die Rahmenelemente sind als Hohlprofile ausgebildet. In der Kabine sind Luftströmungskanäle vorgesehen, die der Zufuhr und Abgabe von klimatisierter Luft durch den Luftströmungskanälen zugeordneten Luftaustrittsöffnungen in das Innere der Kabine dienen. Eine im Kabinendach angeordneten Luftbehandlungsvorrichtung weist Schläuche auf, welche durch die in vertikaler Richtung verlaufenden Rahmenelemente geführt sind, um Kondensat aus der Luftbehandlungsvorrichtung abzuführen. Weiterhin können in den in vertikaler Richtung verlaufenden Rahmenelementen zum Kabinendach führende Leitungen verlegt sein.

Um die in vertikaler Richtung verlaufenden Rahmenelemente in ihrem dem Kabinendach abgewandten unteren Bereich abzudichten, ist es üblich, diese abschnittsweise mit einem Montageschaum auszuschäumen. Mit einem solchen Montageschaum lässt sich der untere Bereich luftdicht verschließen. Dies dient einerseits dem Vermeiden des Eintritts von Fremdkörpern, wie Staub und Schmutz. Zum anderen dient es dazu, das Eintreten von Luftschall in die Rahmenelemente zumindest zu reduzieren. Dabei ist beim Ausschäumen darauf zu achten, dass nicht zu viel Montageschaum eingebracht wird. Gerade die Dosierung der einzubringenden Montageschaummenge ist problematisch. Vor allem wenn zu viel Montageschaum eingebracht wird, führt dies zu einer unkontrollierten Ausdehnung des Montageschaums in beide Richtungen im Inneren des Rahmenelementes, wobei der Montageschaum ungewollt auch in Bereiche gelangen, die nicht verschlossen werden sollen.

Neben der Problematik der Dosierung der Montageschaummenge ist ein weiterer Nachteil des Einsatzes von Montageschaum, dass auch der Montageschaum einem Alterungsprozess unterliegt, der dazu führt, dass die Dichtigkeit sukzessive verloren geht. Der Montageschaum wird zunehmend brüchig. Um den unteren Bereich wieder luftdicht verschließen zu können, muss der alte Montageschaum mit großem Aufwand entfernt werden, bevor neuer einbringbar ist. Dabei besteht die Gefahr der Beschädigung des ebenfalls eingeschäumten Schlauchs oder sonstiger Leitungen.

Aus der DD 22 41 97 A1 ist es bekannt, zur Lärmreduzierung einer Häckselvorrichtung eines Feldhäckslers die im Trommelkörper und in den Messerträgern vorhandenen Hohlräume mit pastösen Stoffen auszuschäumen. Dabei werden die im Trommelkörper und den Messerträgern vorhandenen Hohlräume mit PUR-Weichschaum oder PUR-Hartschaum ausgeschäumt. Durch diese Maßnahme werden die durch den Schnittvorgang an Schneide und Gegenschneide erzeugten und durch die als Resonanzkörper wirkenden Hohlräume verstärkten Geräusche, die sich durch Luft- und Körperschall ausbreiten, durch das Ausschäumen mit dämpfenden Materialien am Entstehungsort gemindert.

Aus der EP 0 697 956 B1 ist es bekannt, die Schallausbreitung in Karosserien von Kraftfahrzeugen durch eingesetzte Formstücke, die aus zwei Platten und einem dazwischen angeordneten wärmeschäumbaren Material, zu unterbinden. Zum Abdichten wird das Formstück thermisch aktiviert, was zu einer Formvergrößerung führt. Hierzu ist eine Mindesttemperatur von 50°C erforderlich. Das zerstörungsfreie Entfernen des Formstücks ist nach erfolgter thermischer Aktivierung nicht mehr möglich.

US 2014/292035 A1, das als der nächstliegenden Stand der Technik angesehen wird, offenbart eine Kabine für ein landwirtschaftliches Arbeitsfahrzeug mit den Merkmalen der Präambel nach unabhängigen Anspruch 1.

Aufgabe der vorliegenden Erfindung ist es, eine Kabine der eingangs genannten Art weiterzubilden, die sich durch eine verbesserte Luftschalldämmungsmaßnahme auszeichnet.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird eine Kabine für ein landwirtschaftliches Arbeitsfahrzeug, insbesondere eine selbstfahrende Erntemaschine, vorgeschlagen, die ein Kabinendach sowie eine das Kabinendach tragende Rahmenstruktur, welche in vertikaler Richtung verlaufende Rahmenelemente sowie quer verlaufende Rahmenelemente aufweist, die jeweils als Hohlprofile ausgebildet sind, umfasst. Zur Reduzierung eines Schalleintritts durch die jeweilige untenseitige Öffnung in den in vertikaler Richtung verlaufenden Rahmenelementen in das Innere der Kabine ist vorgesehen, dass zumindest die in vertikaler Richtung verlaufenden Rahmenelemente zumindest auf ihrer dem Kabinendach abgewandten Seite jeweils durch ein in das in vertikaler Richtung verlaufende Rahmenelement einsetzbares Schwingungstilgungselement verschließbar sind, wobei das jeweilige Schwingungstilgungselement wenigstens ein zwischen zumindest zwei Spannplatten angeordnetes Dämpfungselement umfasst, wobei die zumindest zwei Spannplatten in montierter Position des Schwingungstilgungselementes mit einer im Wesentlichen senkrecht zur Oberfläche der Spannplatten gerichteten Kraft beaufschlagbar sind, so dass sich das Dämpfungselement in einer quer zur Kraftwirkungslinie verlaufenden Richtung reversibel ausdehnt und einen untenseitigen Bereich des Rahmenelementes verschließt. Die reversible Ausdehnung des Dämpfungselementes ermöglicht es, das Schwingungstilgungselement bei Bedarf zerstörungsfrei aus dem in vertikaler Richtung verlaufenden Rahmenelement zu entfernen. Der Aufbau des Schwingungstilgungselementes entspricht einer Sandwichbauweise. Der Grad der Ausdehnung ist abhängig vom Material des Dämpfungselementes sowie der auf die Spannplatten aufbringbaren Kraft. Im Unterschied zum Ausschäumen lässt sich im Fall einer Alterung des Materials des Dämpfungselementes und einer damit verbundenen Verringerung der Dichtwirkung entgegenwirken, indem die auf die Spannplatten aufbringbare Kraft erhöht wird.

Gegenüber der Verwendung von Montageschaum oder thermisch aktivierbaren Formstücken, wie es gemäß dem Stand der Technik vorgeschlagen wird, weist das erfindungsgemäß Schwingungstilgungselement den Vorteil auf, dass es kostengünstiger herstellbar ist sowie dass es sich durch einen geringeren Montageaufwand auszeichnet. Insbesondere lässt es sich während der Montage oder zu einem späteren Zeitpunkt nachjustieren, was im Fall des Ausschäumens bzw. nach der thermischen Aktivierung des Formelementes gemäß dem Stand der Technik nicht mehr möglich ist. Das Schwingungstilgungselement verhindert bzw. reduziert den Eintritt von Luftschall in die Kabine. Die in vertikaler Richtung verlaufenden Rahmenelemente sind mit einer Kunststoffhülle verkleidet, in der Luftaustrittsöffnungen vorgesehen sind. Die Zufuhr der von der Luftbehandlungsvorrichtung bereitgestellten Luft erfolgt dabei durch einen sich zwischen dem jeweiligen als Hohlprofil ausgebildeten Rahmenelement und der Kunststoffverkleidung ausbildenden Raum. Die Kunststoffverkleidung ist mit Luftaustrittsöffnungen versehen. Die Luftzufuhr erfolgt durch den Raum zwischen dem Hohlprofil und der Kunststoffverkleidung. Dabei wird das Eintreten von Feuchtigkeit, Schmutzpartikeln und Staub durch die in den Kunststoffverkleidungen vorgesehenen Luftaustrittsöffnungen im Inneren der Kabine verhindert. Bei einer entsprechenden Ausführung des Dämpfungselementes lassen sich zudem im unteren Bereich des in vertikaler Richtung verlaufenden Rahmenelementes befindliche Farbablaufbohrungen verschließen.

Bevorzugt kann das wenigstens eine Dämpfungselement aus einem elastisch verformbaren Material bestehen. Als elastisches Material kommt beispielsweise ein Elastomer in Frage. Als Elastomer kann zum beispielsweise ein Synthesekautschuk, wie Styrol-Butadien-Kautschuk (SBR) oder Nitrilkautschuk (NBR), oder ein Kunststoff, wie beispielsweise Polyurethan, zur Anwendung kommen. Denkbar ist auch eine mehrschichtige Anordnung von Dämpfungselementen. Dabei können zwei oder mehr Dämpfungselemente verwendet werden, die sich durch unterschiedliche Materialeigenschaften auszeichnen. Die Anordnung von mehreren Dämpfungselementen aus unterschiedlichen Materialien kann in horizontaler oder vertikaler Richtung des Schwingungstilgungselementes variieren.

Zur Übertragung der aufbringbaren Kraft auf das wenigstens eine Dämpfungselement bestehen die zumindest zwei Spannplatten bevorzugt aus einem druckfesten Material, wie einem Metall. Die zumindest zwei Spannplatten lassen sich kostengünstig in großer Stückzahl herstellen. Dabei sind diese in einfacher Weise an unterschiedliche Querschnittsformen der in vertikaler Richtung verlaufenden Rahmenelemente anpassbar.

Vorzugsweise kann das wenigstens eine Dämpfungselement eine mit dem inneren Querschnitt des jeweiligen in vertikaler Richtung verlaufenden Rahmenelementes korrespondierende äußere Kontur aufweisen. Eine an die Querschnittform des als Hohlprofil ausgeführten vertikal verlaufenden Rahmenelementes angepasste Kontur verbessert die Dichtungseigenschaften des Schwingungstilgungselementes. Insbesondere lässt sich somit ein luftdichtes Verschließen des Rahmenelementes gewährleisten.

Des Weiteren können die zumindest zwei Spannplatten eine mit dem inneren Querschnitt des jeweiligen in vertikaler Richtung verlaufenden Rahmenelementes korrespondierende äußere Kontur aufweisen. Somit können die zumindest zwei Spannplatten bei der Montage eine Führungsfunktion beim Einsetzten in das in vertikaler Richtung verlaufende Rahmenelement übernehmen. Zudem kann dadurch vermieden werden, dass das Schwingungstilgungselement unsachgemäß verbaut wird. Die von zumindest zwei Spannplatten auf das wenigstens eine Dämpfungselement übertragene Flächenpressung wird bei an angepasster äußerer Kontur besonders gleichmäßig übertragen.

Weiterhin kann zwischen den zumindest zwei Spannplatten zumindest ein Distanzelement angeordnet sein. Durch das zumindest eine Distanzelement lässt sich die von den zumindest zwei Spannplatten auf das wenigstens einen Dämpfungselement ausgeübte Flächenpressung definiert einstellen. Hierzu kann der Verstellweg der zumindest zwei Spannplatten durch das zumindest eine Distanzelement auf eine vorgebbares Maß begrenzt werden. Dabei kann das zumindest eine Distanzelement in dem wenigstens einen Dämpfungselement angeordnet sein. Alternativ kann vorgesehen sein, dass das zumindest eine Distanzelement auf einer dem wenigstens einen Dämpfungselement zugewandten Innenfläche einer der Spannplatten angeordnet ist und sich in das Dämpfungselement hinein erstreckt. Die Begrenzung des Verstellweges bewirkt eine gleichmäßige Kraftbeaufschlagung der Spannplatten und damit der Ausdehnung des dazwischen befindlichen Dämpfungselementes.

Zur Aufbringung und Einstellung einer der Beaufschlagung des Schwingungstilgungselementes dienenden Kraft können die zumindest zwei Spannplatten sowie das wenigstens eine Dämpfungselement von zumindest einem Spannmittel durchdrungen sein. Vorteilhaft ist, dass hierfür vorgesehene Durchgangsbohrungen durch das Ausdehnen des wenigstens eines Dämpfungselementes ebenfalls verschlossen werden.

Hierzu kann das Spannmittel als wenigstens ein zylindrisches Bauteil mit einem Außengewindeabschnitt ausgeführt sein, welcher sich durch die eine Spannplatte und das wenigstens eine Dämpfungselement hindurch erstreckt ist, und mit einem korrespondierenden Innengewindeabschnitt, welcher der gegenüberliegenden Spannplatte zugeordnet ist, verbindbar ist. Zum Verschrauben kann das zylindrische Bauteil endseitig einen Werkzeugangriffsabschnitt aufweisen, welche an einem dem Außengewindeabschnitt gegenüberliegenden Ende des zylindrischen Bauteils angeordnet ist. Zur Demontage wird das Spannmittel gelöst, so dass sich das wenigstens eine Dämpfungselement in seine Ausgangsform zurückziehen kann.

In bevorzugter Weiterbildung können die zumindest zwei Spannplatten sowie das wenigstens eine Dämpfungselement zumindest eine zusätzliche Durchführung aufweisen. Diese zusätzliche Durchführung dient der Aufnahme eines Schlauchs und/oder einer oder mehrerer Leitungen, die jeweils im Inneren eines oder mehrerer der in vertikaler Richtung verlaufenden Rahmenelemente der Kabine verlaufen können. Durch die im Wesentlichen vertikal gerichtete Kraftbeaufschlagung der zumindest zwei Spannplatten wird das dazwischenliegende Dämpfungselement sowohl nach außen in Richtung des Rahmenelementes als auch nach Innen in Richtung der zusätzlichen Durchführung ausgedehnt. Dadurch wird bzw. werden der Schlauch und/oder die eine oder mehrere Leitungen, die durch die zusätzliche Durchführung geführt sind, ebenfalls dicht verschlossen.

Um ein Einschnüren des Schlauchs oder der Leitungen zu vermeiden, kann vorgesehen sein, dass im Bereich der zumindest einen zusätzliche Durchführung ein Dämpfungselement aus einem weicheren Material vorgesehen ist, welches von einem Dämpfungselement aus einem härteren Material umschlossen ist.

Eine erfindungsgemäß gestaltete Kabine ist Teil einer landwirtschaftlichen Arbeitsfahrzeuges, insbesondere einer selbstfahrenden Erntemaschine wie einem Mähdrescher oder einem Feldhäcksler.

Die vorliegende Erfindung wird nachstehend anhand eines in den Zeichnungen dargestellten Ausführungsbeispieles näher erläutert.

Es zeigen:
- Fig. 1: eine schematische Ansicht eines Mähdreschers;
- Fig. 2: eine perspektivische Ansicht einer Kabine;
- Fig. 3: eine Draufsicht auf Komponenten eines Schwingungstilgungselementes;
- Fig. 4: eine Draufsicht auf Komponenten eines Schwingungstilgungselementes gemäß einer zweiten Ausführungsform;
- Fig. 5: eine perspektivische Ansicht eines Endbereiches eines Rahmenelementes der Kabine mit einem vormontierten Schwingungstilgungselement vor dem Einführen in das Rahmenelement;
- Fig. 6: eine perspektivische Ansicht des Endbereiches des Rahmenelementes nach dem Einführen des vormontierten Schwingungstilgungselementes in das Rahmenelement.

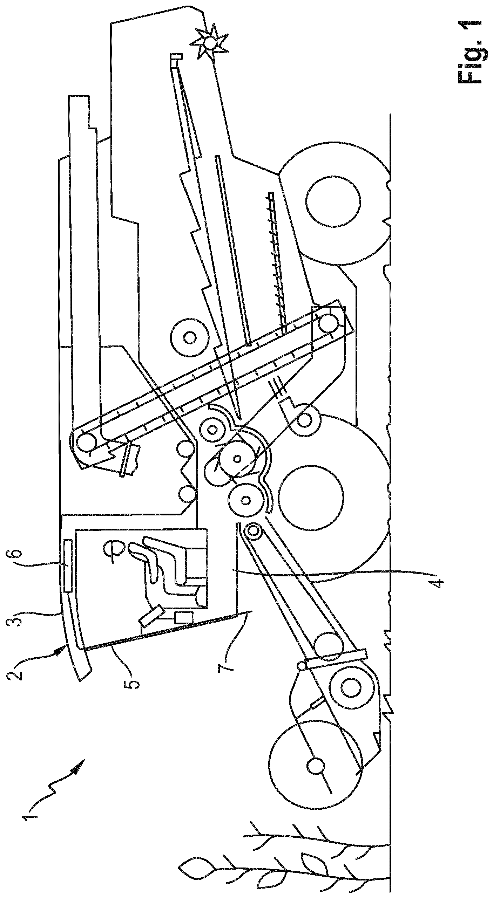

In Fig. 1 ist eine schematische Ansicht eines als Mähdreschers 1 ausgeführten landwirtschaftlichen Arbeitsfahrzeugs dargestellt. Der Mähdrescher 1 umfasst eine Kabine 2, welche ein Kabinendach 3, einen Kabinenboden 4 sowie eine das Kabinendach 3 tragende Rahmenstruktur 5 aufweist. Die Rahmenstruktur 5 In dem Kabinendach 3 ist eine Luftbehandlungsvorrichtung 6 angeordnet, welche der Klimatisierung des Inneren der Kabine 2 dient. Ein der Abführung von Kondensat dienender Ablauf 7 in Form eines Schlauchs ist im Bereich des Kabinenbodens 4 nach außen geführt.

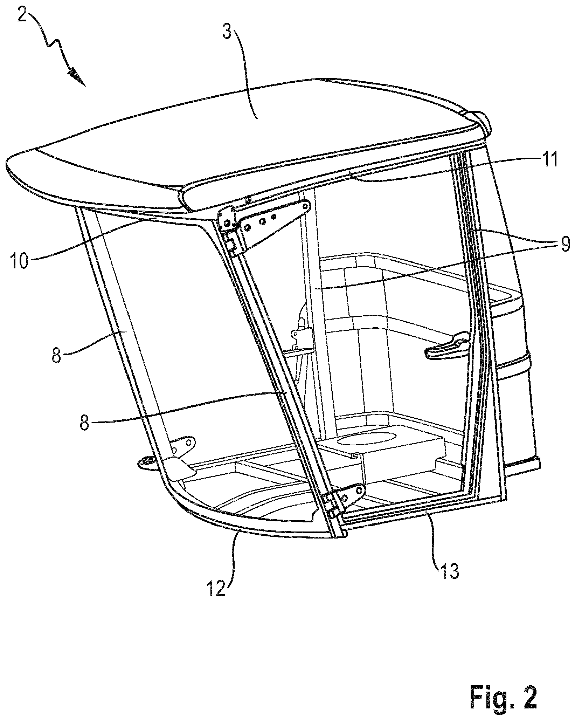

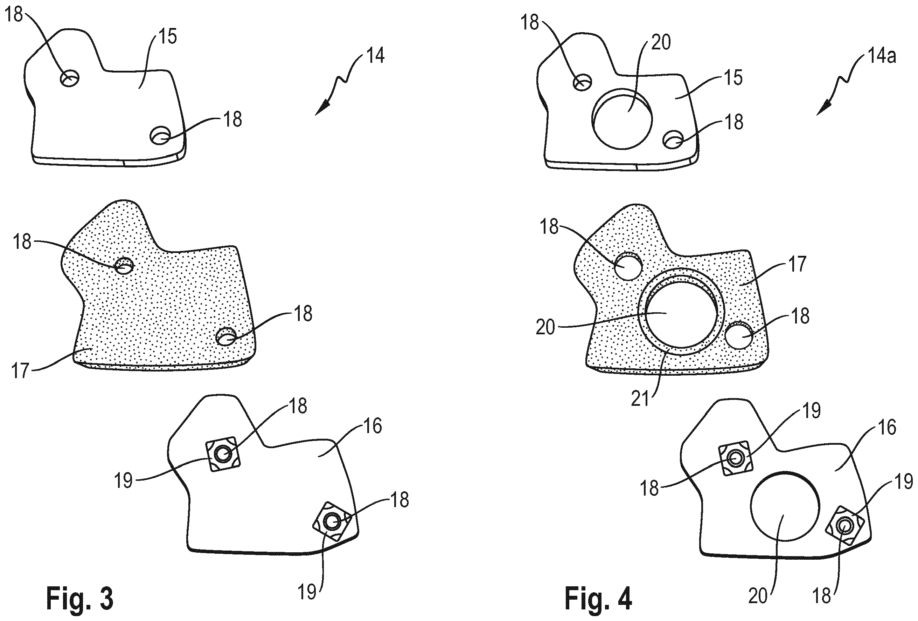

In Fig. 2 ist eine perspektivische Ansicht der Kabine 2 des Mähdreschers 1 dargestellt. Die Rahmenstruktur 5 weist in vertikaler Richtung verlaufende Rahmenelemente 8, 9 auf, die beabstandet zueinander angeordnet sind. Die in vertikaler Richtung verlaufenden vorderen Rahmenelemente 8 sind gegenüber den beabstandet angeordneten hinteren Rahmenelement 9 geneigt positioniert. Die in vertikaler Richtung verlaufenden vorderen Rahmenelemente 8 und hinteren Rahmenelemente 9 sind an ihren dem Kabinendach 3 zugewandten Enden durch obere quer verlaufende Rahmenelemente 10, 11 miteinander verbunden. An ihren dem Kabinenboden 3 zugewandten Endbereichen sind die in vertikaler Richtung verlaufenden Rahmenelemente 8, 9 durch untere quer verlaufende Rahmenelemente 12, 13 miteinander verbunden. Zumindest die in vertikaler Richtung verlaufenden Rahmenelemente 8, 9 sind als Hohlprofile ausgebildet. Die untenseitig offenen in vertikaler Richtung verlaufenden Rahmenelemente 8, 9 sind jeweils durch ein Schwingungstilgungselementes 14 verschließbar, welches in den Fig. 3 bis 6 dargestellt ist, indem das jeweilige Schwingungstilgungselement 14 zumindest abschnittsweise in das jeweilige in vertikaler Richtung verlaufende Rahmenelement 8, 9 eingeführt wird.

Die Darstellung in Fig. 3 zeigt eine Draufsicht auf einzelne Komponenten des Schwingungstilgungselementes 14. Das Schwingungstilgungselement 14 umfasst zumindest zwei Spannplatten 15, 16 sowie wenigstens ein Dämpfungselement 17, welches zwischen den beiden Spannplatten 15, 16 angeordnet wird, so dass der Aufbau des Schwingungstilgungselement 14 einer Sandwichbauweise entspricht. Die Spannplatten 15, 16 sowie das wenigstens ein Dämpfungselement 17 weisen eine im Wesentlichen miteinander übereinstimmende äußere Kontur auf. Das Dämpfungselement 17 besteht aus zumindest einem elastischen Material, insbesondere einem Elastomer. Die Spannplatten 15, 16 bestehen hingegen aus einem druckfesten Material, wie einem Metall.

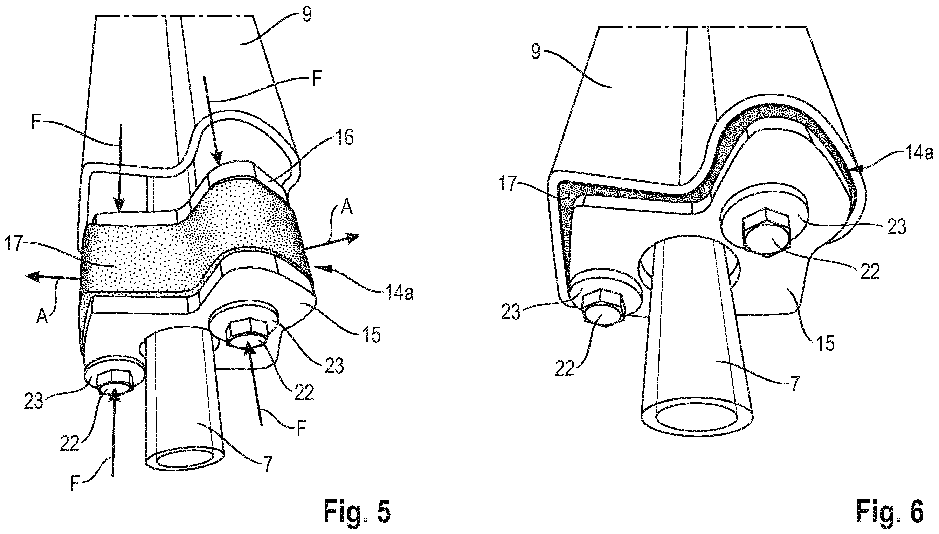

Die Spannplatten 15, 16 sowie das wenigstens eine Dämpfungselement 17 sind jeweils mit zwei Durchbohrungen 18 versehen, die in vormontiertem Zustand des Schwingungstilgungselementes 14 fluchtend hintereinander angeordnet sind. Die Durchgangsbohrungen 18 dienen der Aufnahme jeweils eines Spannmittels, welche sich zumindest abschnittsweise durch das Schwingungstilgungselement 14 erstecken. Die Durchgangsbohrungen 18 sind beabstandet zueinander angeordnet. Denkbar ist auch eine Ausführung der Spannplatten und des wenigstens einen Dämpfungselementes mit nur einer, im Wesentlichen zentrisch angeordneten Durchgangsbohrung. Das jeweilige Spannmittel ist als ein zylindrisches Bauteil mit einem Außengewindeabschnitt ausgeführt, welches sich durch die eine Spannplatte 15 und das wenigstens eine Dämpfungselement 17 hindurch erstreckt, und mit einem korrespondierenden Innengewindeabschnitt 19, welcher der gegenüberliegenden Spannplatte 16 zugeordnet ist, verbindbar ist. Im dargestellten Ausführungsbeispiel sind die Spannmittel, wie in den Fig. 5 und 6 dargestellt, als eine Schraube 22 ausgeführt.

In Fig. 4 ist eine Draufsicht auf Komponenten eines Schwingungstilgungselementes 14a gemäß einer zweiten Ausführungsform dargestellt. Das dargestellte Schwingungstilgungselement 14a unterscheidet sich von dem in Fig. 3 dargestellten Schwingungstilgungselement 14 dadurch, dass in den Spannplatten 15, 16 sowie dem wenigstens einen Dämpfungselement 17 eine Durchführung 20 vorgesehen ist, welche der Aufnahme des Ablaufs 7 oder einer oder mehrerer Leitungen dient, die in einem der in vertikaler Richtung verlaufenden Rahmenelemente 8, 9 geführt sind. Wie weiter in Fig. 4 angedeutet, ist das Dämpfungselement 17 aus einem ersten elastisch verformbaren Material hergestellt, während der Bereich der zusätzlichen Durchführung 20 von einem weiteren, in das Dämpfungselement 17 eingefügte Dämpfungselement 21 umschlossen ist, welches aus einem zweiten elastisch verformbaren Material besteht, dessen Eigenschaften sich von dem Material des Dämpfungselementes 17 unterscheidet.

Fig. 5 zeigt eine perspektivische Ansicht eines Endbereiches eines der Rahmenelement 8, 9 der Kabine 2 mit einem vormontierten Schwingungstilgungselement 14a gemäß Fig. 4 vor dem Einführen in eines der hinteren Rahmenelement 9. Die Spannplatten 15, 16 schließen das Dämpfungselement 17 zwischen sich ein. Die sich durch das Schwingungstilgungselement 14a erstreckenden Schrauben 22 liegen mit ihrem als Werkzeugangriffsabschnitt ausgebildeten Schraubenkopf auf einer Unterlegscheibe auf. Der Gewindeabschnitt der jeweiligen Schraube 22 ist in den Innengewindeabschnitt 19 der gegenüberliegenden Spannplatte 16 eingeschraubt, wobei durch das Anziehen der Schrauben 22 auf die Spannplatten 15, 16 ausgeübte, senkrecht zur Oberfläche der Spannplatten 15, 16 gerichtete Kräfte F keine Stauchung des Dämpfungselementes 17 bewirken. Zur Montage wird zunächst der Ablauf 7 durch die Durchführungen 20 geführt. Im Anschluss wird aufgrund der an den inneren Querschnitt des Rahmenelementes 9 angepassten Kontur des Schwingungstilgungselement 14a dieses in das Rahmenelement 9 eingeführt. Um den in Umfangsrichtung verbleibenden Spalt zwischen dem Schwingungstilgungselement 14a und der Innenmantelfläche des Rahmenelementes 9 zu verschließen, werden die Schrauben 22 angezogen. Das Anziehen der Schrauben 22 bewirkt eine Ausdehnung A des Dämpfungselementes 17, die wegen der Elastizität des Materials, aus welchem das Dämpfungselement 17 besteht, reversible ist. Die reversible Ausdehnung A erfolgt dabei in einer quer zur Kraftwirkungslinie verlaufenen Richtung. Fig. 6 zeigt eine perspektivische Ansicht des Endbereiches des Rahmenelementes 9 nach dem Einführen des vormontierten Schwingungstilgungselementes 14a in das Rahmenelement9 und dem Anziehen der Schrauben 22. Wie aus der Darstellung ersichtlich ist, hat sich das Dämpfungselement 17 in Umfangsrichtung nach außen, zum Rahmenelement 9, als auch nach innen, zum Ablauf 7 hin ausgedehnt und umschließt diese jeweils luftdicht. Die Ausgestaltung des Schwingungstilgungselementes 14a mit dem zusätzlichen Dämpfungselement 21 hat den Vorteil, dass eine ungewollte Einschnürung des Ablaufs 7 verhindert werden kann, wenn das Dämpfungselement 21 eine größere Elastizität aufweist als das umgebende Dämpfungselement 17.

Um die durch das Anziehen der Schrauben 22 aufgebrachte Kraft einstellen zu können, ist vorgesehen, das zwischen den dem Dämpfungselement 17 zugewandten Innenflächen der Spannplatten 15, 16 ein oder mehrere Distanzelemente angeordnet sind, welche das Einhalten eines definierten Mindestabstandes zwischen den Spannplatten 15, 16 bewirken. Hierdurch wird bei der Fixierung des Schwingungstilgungselementes 14a im Rahmenteil 9 das Anziehen der Schrauben 22 vereinfacht.

### Bezugszeichenliste

- 1: Mähdrescher
- 2: Kabine
- 3: Kabinendach
- 4: Kabinenboden
- 5: Rahmenstruktur
- 6: Luftbehandlungsvorrichtung
- 7: Ablauf
- 8: Vorderes Rahmenelement
- 9: Hinteres Rahmenelement
- 10: Oberes quer verlaufendes Rahmenelement
- 11: Oberes quer verlaufendes Rahmenelement
- 12: Unteres quer verlaufendes Rahmenelement
- 13: Unteres quer verlaufendes Rahmenelement
- 14: Schwingungstilgungselement
- 14a: Schwingungstilgungselement
- 15: Spannplatte
- 16: Spannplatte
- 17: Dämpfungselement
- 18: Durchgangsbohrung
- 19: Innengewindeabschnitt
- 20: Durchführung
- 21: Dämpfungselement
- 22: Schraube
- 23: Unterlegscheibe

- A: Ausdehnung
- F: Kraft

## Patentansprüche

1. Kabine (2) für ein landwirtschaftliches Arbeitsfahrzeug (1), umfassend ein Kabinendach (3) sowie eine das Kabinendach (3) aufnehmende Rahmenstruktur (5), welche in vertikaler Richtung verlaufende Rahmenelemente (8, 9) sowie quer verlaufende Rahmenelemente (10, 10, 12, 13) aufweist, die als Hohlprofile ausgebildet sind, **dadurch gekennzeichnet, dass** zumindest die in vertikaler Richtung verlaufenden Rahmenelemente (8, 9) zumindest auf ihrer dem Kabinendach (3) abgewandten Seite jeweils durch ein in das in vertikaler Richtung verlaufende Rahmenelement (8, 9) einsetzbares Schwingungstilgungselement (14, 14a) verschließbar sind, wobei das jeweilige Schwingungstilgungselement (14, 14a) wenigstens ein zwischen zumindest zwei Spannplatten (15, 16) angeordnetes Dämpfungselement (17, 21) umfasst, wobei die zumindest zwei Spannplatten (15, 16) in montierter Position des Schwingungstilgungselementes (14, 14a) mit einer im Wesentlichen senkrecht zur Oberfläche der Spannplatten (15, 16) gerichteten Kraft (F) beaufschlagbar sind, so dass sich das Dämpfungselement (17, 21) in einer quer zur Kraftwirkungslinie verlaufenen Richtung reversibel ausdehnt und einen untenseitigen Bereich des in vertikaler Richtung verlaufenden Rahmenelementes (8, 9) verschließt.

2. Kabine (2) nach Anspruch 1, **dadurch gekennzeichnet, dass** das wenigstens eine Dämpfungselement (17, 21) aus einem elastisch verformbaren Material besteht.

3. Kabine (2) nach einem der Ansprüche 1 oder 2, **dadurch gekennzeichnet, dass** die zumindest zwei Spannplatten (15, 16) aus einem druckfesten Material bestehen.

4. Kabine (2) nach einem der Ansprüche 1 bis 3, **dadurch gekennzeichnet, dass** das wenigstens eine Dämpfungselement (17, 21) eine mit dem inneren Querschnitt des jeweiligen in vertikaler Richtung verlaufenden Rahmenelementes (8, 9) korrespondierende äußere Kontur aufweist.

5. Kabine (2) nach einem der vorangehenden Ansprüche, **dadurch gekennzeichnet, dass** die zumindest zwei Spannplatten (15, 16) eine mit dem inneren Querschnitt des jeweiligen in vertikaler Richtung verlaufenden Rahmenelementes (8, 9) korrespondierende äußere Kontur aufweisen.

6. Kabine (2) nach einem der vorangehenden Ansprüche, **dadurch gekennzeichnet, dass** zwischen den zumindest zwei Spannplatten (15, 16) zumindest ein Distanzelement angeordnet ist.

7. Kabine (2) nach einem der vorangehenden Ansprüche, **dadurch gekennzeichnet, dass** die zumindest zwei Spannplatten (15, 16) sowie das wenigstens eine Dämpfungselement (17, 21) von zumindest einem Spannmittel (22) durchdrungen sind.

8. Kabine nach Anspruch 7, dass das Spannmittel (22) als wenigstens ein zylindrisches Bauteil mit einem Außengewindeabschnitt ausgeführt ist, welcher sich durch die eine Spannplatte (15, 16) und das wenigstens eine Dämpfungselement (17, 21) hindurch erstreckt ist, und mit einem korrespondierenden Innengewindeabschnitt (19), welcher der gegenüberliegenden Spannplatte (15, 16) zugeordnet ist, verbindbar ist.

9. Kabine (2) nach einem der vorangehenden Ansprüche, **dadurch gekennzeichnet, dass** die zumindest zwei Spannplatten (15, 16) sowie das wenigstens eine Dämpfungselement (17, 21) zumindest eine zusätzliche Durchführung (20) aufweisen.

10. Landwirtschaftliches Arbeitsfahrzeug (1) mit einer Kabine (2), **dadurch gekennzeichnet, dass** die Kabine (2) nach einem der Ansprüche 1 bis 9 ausgebildet ist.

## Claims

1. A cabin (2) for an agricultural working vehicle (1), comprising a cabin roof (3) as well as a frame structure (5) receiving the cabin roof (3), which has frame elements (8, 9) running in the vertical direction as well as frame elements (10, 10, 12, 13) running transversely and which are configured as hollow profiles, **characterized in that** at least the frame elements (8, 9) running in the vertical direction can respectively be closed, at least on their side facing away from the cabin roof (3), by a vibration damping element (14, 14a) which can be inserted into the frame element (8, 9) running in the vertical direction, wherein the respective vibration damping element (14, 14a) comprises at least one damping element (17, 21) which is disposed between at least two clamping plates (15, 16), wherein in the mounted position of the vibration damping element (14, 14a), the at least two clamping plates (15, 16) can be loaded with a force (F) directed substantially perpendicular to the surface of the clamping plates (15, 16), so that the damping element (17, 21) extends reversibly in a direction running transversely to the line of action of the force and seals a bottom region of the frame element (8, 9) running in the vertical direction.

2. The cabin (2) according to claim 1, **characterized in that** the at least one damping element (17, 21) consists of an elastically deformable material.

3. The cabin (2) according to claim 1 or claim 2, **characterized in that** the at least two clamping plates (15, 16) consist of a compression resistant material.

4. The cabin (2) according to one of claims 1 to 3, **characterized in that** the at least one damping element (17, 21) has an external contour which corresponds to the internal cross section of the respective frame element (8, 9) running in the vertical direction.

5. The cabin (2) according to one of the preceding claims, **characterized in that** the at least two clamping plates (15, 16) have an external contour which corresponds to the internal cross section of the respective frame element (8, 9) running in the vertical direction.

6. The cabin (2) according to one of the preceding claims, **characterized in that** at least one spacer element is disposed between the at least two clamping plates (15, 16).

7. The cabin (2) according to one of the preceding claims, **characterized in that** the at least two clamping plates (15, 16) as well as the at least one damping element (17, 21) are pierced by at least one clamping means (22).

8. The cabin according to claim 7, **characterized in that** the clamping means (22) is configured as at least one cylindrical component with an externally threaded section which extends through the one clamping plate (15, 16) and the at least one damping element (17, 21), and can be connected to a corresponding internally threaded section (19) which is associated with the opposing clamping plate (15, 16).

9. The cabin (2) according to one of the preceding claims, **characterized in that** the at least two clamping plates (15, 16) as well as the at least one damping element (17, 21) have at least one additional aperture (20).

10. An agricultural working vehicle (1) having a cabin (2), **characterized in that** the cabin (2) is configured in accordance with one of claims 1 to 9.

## Revendications

1. Cabine (2) pour un véhicule de travail agricole (1), incluant un toit de cabine (3) ainsi qu'une structure de bâti (5) qui reçoit le toit de cabine (3) et qui comporte des éléments de bâti (8, 9) s'étendant dans la direction verticale ainsi que des éléments de bâti (10, 10, 12, 13) s'étendant transversalement, lesquels sont conformés en profils creux, **caractérisée en ce que**, au moins sur leur côté opposé au toit de cabine (3), au moins les éléments de bâti (8, 9) s'étendant dans la direction verticale sont respectivement obturables par l'intermédiaire d'un élément anti-vibrations (14, 14a) insérable dans l'élément de bâti (8, 9) s'étendant dans la direction verticale, l'élément anti-vibrations respectif (14, 14a) incluant au moins un élément amortisseur (17, 21) disposé entre au moins deux plaques de serrage (15, 16), les au moins deux plaques de serrage (15, 16) pouvant, dans la position montée de l'élément anti-vibrations (14, 14a), être sollicitées par une force (F) dirigée sensiblement perpendiculairement à la surface des plaques de serrage (15, 16), de façon que l'élément amortisseur (17, 21) s'étire de manière réversible dans une direction transversale à la ligne d'action de force et obture une zone inférieure de l'élément de bâti (8, 9) s'étendant dans la direction verticale.

2. Cabine (2) selon la revendication 1, **caractérisée en ce que** le au moins un élément amortisseur (17, 21) est constitué de matériau déformable élastiquement.

3. Cabine (2) selon une des revendications 1 ou 2, **caractérisée en ce que** les au moins deux plaques de serrage (15, 16) sont constituées de matériau résistant à la pression.

4. Cabine (2) selon une des revendications 1 à 3, **caractérisée en ce que** le au moins un élément amortisseur (17, 21) présente un contour extérieur correspondant à la section intérieure de l'élément de bâti respectif (8, 9) s'étendant dans la direction verticale.

5. Cabine (2) selon une des revendications précédentes, **caractérisée en ce que** les au moins deux plaques de serrage (15, 16) présentent un contour extérieur correspondant à la section intérieure de l'élément de bâti respectif (8, 9) s'étendant dans la direction verticale.

6. Cabine (2) selon une des revendications précédentes, **caractérisée en ce qu'**entre les au moins deux plaques de serrage (15, 16) est disposée au moins une entretoise.

7. Cabine (2) selon une des revendications précédentes, **caractérisée en ce que** les au moins deux plaques de serrage (15, 16) ainsi que le au moins un élément amortisseur (17, 21) sont traversés par au moins un moyen de serrage (22).

8. Cabine selon la revendication 7, **caractérisée en ce que** le moyen de serrage (22) est conformé en au moins un composant cylindrique avec une portion de filet extérieur qui s'étend à travers une des plaques de serrage (15, 16) et à travers le au moins un élément amortisseur (17, 21) et qui peut être relié à une portion de filet intérieur correspondante (19) qui est associée à la plaque de serrage opposée (15, 16).

9. Cabine (2) selon une des revendications précédentes, **caractérisée en ce que** les au moins deux plaques de serrage (15, 16) ainsi que le au moins un élément amortisseur (17, 21) comportent au moins une traversée supplémentaire (20).

10. Véhicule de travail agricole (1) comprenant une cabine (2), **caractérisé en ce que** la cabine (2) est conçue selon une des revendications 1 à 9.
